(19) Europäisches Patentamt
European Patent Office
Office européen des brevets

(11) **EP 4 363 749 B1**

(12) **EUROPÄISCHE PATENTSCHRIFT**

(45) Veröffentlichungstag und Bekanntmachung des Hinweises auf die Patenterteilung:
**17.06.2026   Patentblatt 2026/25**

(21) Anmeldenummer: **22740367.2**

(22) Anmeldetag: **28.06.2022**

(51) Internationale Patentklassifikation (IPC):
*F16K 3/24* *(2006.01)*    *F16K 27/00* *(2006.01)*
*F16K 31/46* *(2006.01)*    *F16K 47/08* *(2006.01)*

(52) Gemeinsame Patentklassifikation (CPC):
**F16K 31/46; F16K 3/246; F16K 27/00; F16K 47/08**

(86) Internationale Anmeldenummer:
**PCT/EP2022/067779**

(87) Internationale Veröffentlichungsnummer:
**WO 2023/275080 (05.01.2023 Gazette 2023/01)**

(54) **STELLVENTIL**

CONTROL VALVE

SOUPAPE DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2021   DE 202021103439 U**

(43) Veröffentlichungstag der Anmeldung:
**08.05.2024   Patentblatt 2024/19**

(73) Patentinhaber: **Samson Aktiengesellschaft**
**60314 Frankfurt (DE)**

(72) Erfinder:
• **SANDER, Andreas**
  **69514 Laudenbach (DE)**
• **MOHR, Stefan**
  **60316 Frankfurt am Main (DE)**
• **VOELKER, Christoph**
  **63454 Hanau (DE)**

(74) Vertreter: **patcare Patentanwälte Partnerschaft mbB**
**Bajuwarenring 21**
**82041 Oberhaching (DE)**

(56) Entgegenhaltungen:
| | |
|---|---|
| EP-A1- 3 058 255 | EP-B1- 3 058 255 |
| WO-A1-2007/046379 | WO-A1-2019/136200 |
| WO-A2-2016/106096 | CN-U- 201 818 868 |
| CN-U- 201 818 891 | CN-U- 203 442 149 |
| CN-U- 208 634 432 | CN-U- 210 566 324 |
| DE-A1- 102015 005 611 | DE-A1- 102018 123 544 |
| DE-A1- 102019 104 589 | DE-A1- 2 346 767 |
| DE-B3- 102015 011 551 | DE-U1- 202021 103 581 |
| US-A1- 2009 218 536 | |

**Beschreibung**

Die Erfindung betrifft ein Stellventil gemäß der im Oberbegriff des Anspruches 1 angegebenen Art.

Sogenannte Käfigventile, d.h. einen Ventilkäfig aufweisende Stellventile, sind aus dem Stand der Technik hinreichend bekannt und umfassen in der Regel ein im Ventilgehäuse des Stellventils in axialer Richtung a verfahrbar gelagertes Ventilglied sowie einen mit dem Ventilglied zusammenwirkenden Ventilkäfig. Der Ventilkäfig weist dabei eine Vielzahl von derart angeordneten Drosselkanälen auf, dass über die Hubstellung des Ventilglieds die Öffnungsweite des Ventilkäfigs, also die Anzahl der verschlossenen bzw. geöffneten Drosselkanälen und damit die Drosselquoten, einstellbar ist. Neben dem Ventilkäfig weisen Käfigventile ferner in bekannter Art und Weise einen mit dem Ventilglied zusammenwirkenden, komplementär zum Ventilglied ausgebildeten Ventilsitz auf, sodass in Schließstellung, also wenn das Ventilglied in Anlage mit dem Ventilsitz ist, das Ventil geschlossen ist. Lediglich beispielhaft wird auf die DE 10 2015 005 611 A1 verwiesen.

Es ist weiterhin bekannt, dass zum Regeln oder Steuern von kryogenen Prozessmedien die Stellventile eine besondere konstruktive Ausgestaltung benötigen: Diese Stellventile, nachfolgend auch als Tieftemperaturventile bezeichnet, zeichnen sich dadurch aus, dass das Ventilgehäuse zwei Gehäusebereiche aufweisend ausgebildet ist, nämlich einen den Ventilein- und Ventilauslass, den Ventilkäfig sowie den Ventilsitz aufweisenden, mit dem kryogenen Prozessmedium in Kontakt kommenden ersten Gehäusebereich, sowie einen, sich an den ersten Gehäusebereich anschließenden, als Isolierteil wirkenden, den Gehäusedeckel tragenden zweiten Gehäusebereich. Rein optisch unterscheidet sich somit ein Tieftemperaturventil von anderen Stellventilen durch das lange Isolierteil, durch das ein Abstand zwischen dem von dem kryogenen Prozessmedium durchströmten Ventilgehäuse und Ventiloberteil realisiert wird. Somit verlängert das Isolierteil die Strecke von einem Bereich extremer niedriger Temperaturen zu dem Bereich der temperaturempfindlichen Dichtungsanordnung im Bereich des Gehäusedeckels und dem gehäuseaußenseitig angeordneten Antrieb, mit dem Effekt, dass eine Beschädigung der empfindlichen Bauteile Dichtungsanordnung und Antrieb (durch z.B. Vereisen der Stopfbuchspackung inklusive Blockieren des Ventils) verhindert wird. Es ist weiterhin bekannt, zwischen den beiden Gehäusebereichen eine sogenannte Zirkulationssperre zu verbauen, die verhindert, dass das kalte Prozessmedium im Isolierteil zirkuliert.

Um den Energieaustausch zwischen dem kalten Ventilinnern und der warmen Umgebung zu verhindern, werden Tieftemperaturventile häufig einisoliert oder im Fall von Gasverflüssigungsprozessen in eine Cold Box eingebaut. Folglich sind Arbeiten am Ventil sehr aufwendig, sodass möglichst wartungsarme und langlebige Konstruktionen gefordert sind.

Ein weiteres Stellventil ist in der DE 10 2019 104 589 A1 offenbart. Das Stellventilgehäuse ist vorliegend einteilig ausgebildet, d.h. der den Ventilkäfig und den Ventilsitz aufweisende Gehäusebereich geht nahtlos in den als Isolierteil wirkenden zweiten Gehäusebereich über. Das offenbarte Stellventil zeichnet sich insbesondere dadurch aus, dass der Ventilkäfig und der Ventilsitz eine Baueinheit bilden, die mittels einer ersten Gewindehülse und einem zugeordneten, gehäuseseitigen Anschlag verklemmt im Ventilgehäuse gehalten ist. Die Befestigung der im Isolierteil angeordneten Zirkulationssperre ist entsprechend ausgebildet, d.h., die Zirkulationssperre ist zwischen einem gehäuseseitigen Anschlag und einer weiteren Gewindehülse verklemmt gehalten.

Als nachteilig erweist sich hierbei, dass bei einer Wartung, beispielsweise wenn wegen Verschleißes ein Wechsel des Ventilsitzes durchzuführen ist, zwei Gewindehülsen zu lösen sind, nämlich einmal die die Zirkulationssperre verspannende erste Gewindehülse sowie die die Baueinheit aus Ventilkäfig und Ventilsitz verspannende zweite Gewindehülse, mit der Konsequenz, dass sich die Wartungsarbeiten als relativ zeitintensiv, aufwendig und damit teuer erweisen.

Ein gattungsgemäßes, die Merkmale des Oberbegriffes des Patentanspruches 1 aufweisendes Stellventil ist aus der DE 10 2015 011 551 B3 bekannt.

Der Erfindung liegt die Aufgabe zugrunde, ein Stellventil gemäß der im Oberbegriff des Anspruches 1 angegebenen Art derart weiterzubilden, dass eine vereinfachte Wartung ermöglicht ist.

Diese Aufgabe wird durch die kennzeichnenden Merkmale des Anspruches 1 in Verbindung mit seinen Oberbegriffsmerkmalen gelöst.

Die Unteransprüche 2 bis 12 bilden vorteilhafte Weiterbildungen des erfindungsgemäßen Stellventils.

Das Stellventil ist zum Regeln und Steuern von kryogenen Prozessmedien vorgesehen, nachfolgend ist es daher auch alternativ als Tieftemperaturventil bezeichnet, umfasst in bekannter Art und Weise ein zwei Gehäusebereiche aufweisendes Ventilgehäuse, nämlich einen von dem kryogenen Prozessmedium zu durchströmenden, einen Ventilein- und Ventilauslass aufweisenden Grundkörper, in dem im Strömungskanal zwischen Ventilein- und Ventilauslass ein Ventilsitz und ein Ventilkäfig angeordnet sind, und einen den Grundkörper in axialer Richtung a verlängernden, als Isolationsteil wirkenden Verlängerungskörper. Das Stellventil bzw. Tieftemperaturventil umfasst ferner in bekannter Art und Weise ein in Bezug zum Ventilsitz und Ventilkäfig in axialer Richtung a verfahrbares Ventilglied, das über eine Antriebsstange mit einer Stellgliedstange eines Antriebs verbindbar ist, sowie einen den Verlängerungskörper dichtend verschließenden Ventildeckel, durch den die mit der Antriebsstange zu verbindende Stellgliedstange des Antriebs dichtend hindurchführbar ist. Um eine in axiale Richtung a zum Deckel hin gerichtete Zirkulation des kryogenen Prozessmediums zu unterbinden, umfasst das Stellventil ferner in bekannter Art und Weise eine im Ventilgehäuse angeordnete Zirkulationssperre, wobei die Zirkulationssperre und der Ventilkäfig korrespondierend zueinander ausgebildete, in axialer Richtung a gegenüberliegend ausgerichtete Anpressflächen aufweisen, über die die Zirkulationssperre und der Ventilkäfig miteinander in Kontakt stehen.

Erfindungsgemäß ist nunmehr vorgesehen, dass die Bauteile Ventilsitz und Ventilkäfig eine Baueinheit bilden und über eine zwischen Ventilkäfig und Ventilsitz ausgebildete Schraubverbindung miteinander verbunden sind und dass die über die gegenüberliegenden Anpressflächen miteinander in Kontakt stehenden Bauteile Zirkulationssperre und die Baueinheit aus Ventilkäfig und Ventilsitz gemeinsam über ein einziges Befestigungsmittel axial verklemmt im Ventilgehäuse gehalten sind.

Lediglich der Vollständigkeit halber wird darauf hingewiesen, dass unter dem "Befestigungsmittel" ganz allgemein ein Befestigungsmittel zu verstehen ist, welches ausgebildet ist, auf die Zirkulationssperre eine Axialkraft auszuüben.

Die erfindungsgemäße Ausgestaltung des Stellventils erweist sich als besonders vorteilhaft, da nunmehr die Befestigung der Bauteile Zirkulationssperre und die Baueinheit aus Ventilkäfig und Ventilsitz im Ventilgehäuse mittels eines einzigen Befestigungsmittels realisiert ist, bei Wartungsarbeiten nur ein einziges Befestigungsmittel zu lösen ist, sodass eine vereinfachte Wartung ermöglicht ist. Somit ist in vorteilhafter Weise eine besonders einfach zu handhabende Wartung ermöglicht, da nunmehr nach Demontage des Antriebs und des Gehäusedeckels und nach Lösen des Befestigungsmittels und Entnahme der Zirkulationssperre, der Ventilsitz und der Ventilkäfig zu Wartungszwecken als eine Einheit aus dem Stellventilgehäuse entnommen werden können. D.h., auch der "tief im Innern" des Ventilgehäuses positionierte Ventilsitz ist nunmehr entnehmbar, ohne dass zusätzliche Befestigungsmittel zu lösen sind.

Gemäß einer ersten Ausführungsform des erfindungsgemäßen Stellventils weist der Ventilkäfig eine käfigseitige Anschlagfläche auf und am Grundkörper ist eine korrespondierend dazu ausgebildete Gehäuseschulter ausgebildet. Über die käfigseitige Anschlagfläche und die korrespondierend ausgebildete Gehäuseschulter stehen der Ventilkäfig und der Grundkörper des Ventilgehäuses miteinander in Kontakt, d.h., über die käfigseitige Anschlagfläche ist die Baueinheit aus Ventilkäfig und Ventilsitz axial abgestützt an der Gehäuseschulter gehalten, sodass die Bauteile Zirkulationssperre und die Baueinheit aus Ventilkäfig und Ventilsitz über das eine Axialkraft auf die Zirkulationssperre ausübende Befestigungsmittel verklemmbar sind.

Eine alternative zweite Ausführungsform des erfindungsgemäßen Stellventils sieht vor, dass der Ventilsitz eine sitzseitige Kontaktfläche und der Grundkörper des Ventilgehäuses einen dazu korrespondierend ausgebildeten grundkörperseitigen Anschlag aufweisen. D.h. die Baueinheit aus Ventilkäfig und Ventilsitz ist über die sitzseitige Kontaktfläche axial abgestützt am grundkörperseitigen Anschlag gehalten, sodass die Zirkulationssperre sowie die Baueinheit aus Ventilkäfig und Ventilsitz über das eine Axialkraft auf die Zirkulationssperre ausübende Befestigungsmittel verklemmbar sind. Um eine möglichst einfache und schnell durchzuführende axiale Verklemmung mittels des Befestigungsmittels durchführen zu können, ist erfindungsgemäß das Befestigungsmittel als eine ein Außengewinde aufweisende Gewindehülse ausgebildet, die in ein korrespondierend ausgebildetes Innengewinde im Ventilgehäuse einschraubbar ist.

Eine weitere bevorzugte Ausführungsform des erfindungsgemäßen Stellventils zeichnet sich dadurch aus, dass die Wandstärken der Ventilgehäuseteile Grundkörper und Verlängerungskörper unterschiedlich ausgebildet sind, nämlich dass der Grundkörper eine im Vergleich zum Verlängerungskörper größere Wandstärke aufweist.

Bevorzugt sind der Grundkörper und der Verlängerungskörper einteilig ausgebildet, d.h., der Grundkörper geht nahtlos in den Verlängerungskörper über, wobei der Wandstärkenrücksprung den Übergang vom Grundkörper zum Verlängerungskörper angibt, mit anderen Worten, dass in axialer Richtung a betrachtet der Rücksprung der Wandstärke in Bezug auf den Grundkörper dessen verlängerungsseitiges Ende und in Bezug auf den Verlängerungskörper dessen grundkörperseitigen Anfang definiert. Vorteilhaft an dieser Ausführungsform ist, dass das Ventilgehäuse mittels Gießen kostengünstig herstellbar ist, da zusätzliche spanende Fertigungsschritte zum Ausbilden von Flanschflächen nicht erforderlich sind.

Eine alternative Ausgestaltung zeichnet sich dadurch aus, dass der Grundkörper und der Verlängerungskörper zweiteilig ausgebildet sind und in axialer Richtung a der Grundkörper ein dem Verlängerungskörper zugewandtes verlängerungsseitiges Ende und der Verlängerungskörper einen dem Grundkörper zugewandten grundkörperseitigen Anfang aufweist, über die der Grund- und Verlängerungskörper einander kontaktierend stoff- und/oder form- und/oder kraftschlüssig miteinander verbunden sind. Durch die zweiteilige Ausgestaltung des Ventilgehäuses sind in vorteilhafter Weise größere Gestaltungsfreiräume ermöglicht, wie z.B. eine Ausbildung der beiden Gehäusekörper aus unterschiedlichen Materialien oder dergleichen.

Um eine ausreichende Isolierwirkung des Verlängerungskörpers zu gewährleisten, sind der Grundkörper und der Verlängerungskörper in Bezug auf ihre in axialer Richtung a betrachteten Bauteilhöhe $h_1$, $h_2$ vorzugsweise so dimensioniert, dass gilt:

Höhe $h_2$ des Verlängerungskörpers $\geq$ 2 x Höhe $h_1$ des Grundkörpers, wobei mit

$h_1$ die sich in axialer Richtung a betrachtet, ausgehend vom Ventilsitz bis zum verlängerungsseitigen Ende des Grundkörpers erstreckende Höhe des Grundkörpers, und mit

$h_2$ die sich in axialer Richtung a betrachtet, ausgehend vom grundkörperseitigen Anfang bis zum deckelseitigen Ende erstreckende Höhe des Verlängerungskörpers

bezeichnet ist.

Gemäß einer bevorzugten Ausführungsform ist in axialer Richtung a betrachtet die Zirkulationssperre im Bereich des Grundkörpers angeordnet. Denkbar ist aber auch die Zirkulationssperre in axialer Richtung a betrachtet im Bereich des Verlängerungskörpers anzuordnen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

Fig. 1    eine Schnittdarstellung eines erfindungsgemäßen Stellventils, und
Fig. 2    eine vergrößerte Darstellung des Grundkörpers des Stellventils aus Fig. 1.

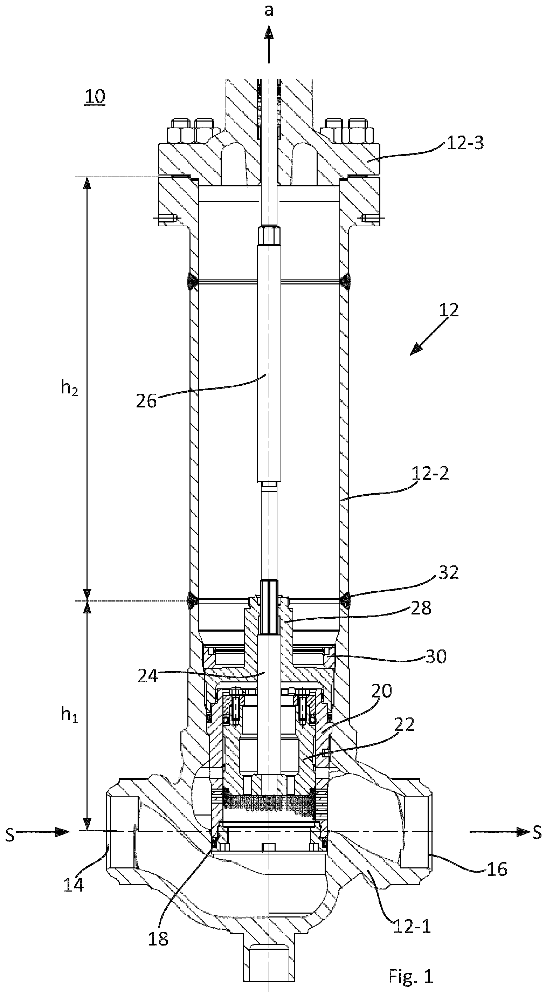

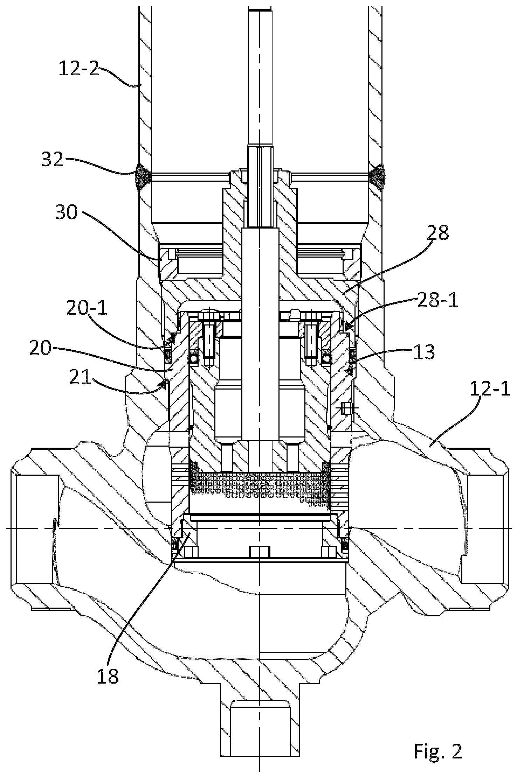

Fig. 1 und Fig. 2 zeigen ein Stellventil 10 für eine verfahrenstechnische Anlage, insbesondere zum Regeln oder Steuern eines kryogenen Prozessmediums. Derartige, zum Regeln oder Steuern von kryogenen Prozessmedien vorgesehene Stellventile 10, werden auch als Tieftemperaturventile bezeichnet. Die Strömungsrichtung ist in Fig. 1 mit S bezeichnet.

Das Stellventil 10 umfasst ein insgesamt mit der Bezugsziffer 12 bezeichnetes Ventilgehäuse, welches seinerseits einen den Ventilein- und Ventilauslass 14, 16 aufweisenden Grundkörper 12-1 und einen sich daran anschließenden, den Grundkörper 12-1 in axialer Richtung a betrachtet verlängernden Verlängerungskörper 12-2 und einen den Verlängerungskörper 12-2 zur Umgebung dichtend verschließenden Ventildeckel 12-3 aufweist.

Das Stellventil 10 umfasst ferner in bekannter Art und Weise einen im Strömungskanal zwischen dem Ventilein- und Ventilauslass 14, 16 angeordneten Ventilsitz 18, einen im Strömungskanal zwischen Ventilein- und Ventilauslass 14, 16 angeordneten Ventilkäfig 20 sowie ein im Bezug zum Ventilsitz 18 und Ventilkäfig 20 in axialer Richtung a verfahrbares Ventilglied 22, das über eine Antriebsstange 24 mit einer Stellgliedstange 26 eines - hier aus Gründen der Übersichtlichkeit nicht dargestellten - Antriebs verbunden ist.

Während der Grundkörper 12-1 im Wesentlichen zur Aufnahme der für das Regeln und Steuern des kryogenen Prozessmediums notwendigen gehäusefesten Bauteile Ventilsitz 18 und Ventilkäfig 20 dient, wirkt der den Grundkörper 12-1 in axialer Richtung a verlängernden Verlängerungskörper 12-2 als ein Isolationsteil, durch das ein verlängerter Abstand zwischen dem das kryogene Prozessmedium führenden Grundkörper 12-1 und dem Ventildeckel 12-3 realisiert ist.

Mit anderen Worten, rein optisch unterscheidet sich ein Tieftemperaturventil von anderen bekannten Stellventilen insbesondere durch das lange Isolationsteil.

Um eine Zirkulation des kryogenen Prozessmediums in den Verlängerungskörper 12-2 zu verhindern, umfasst das Stellventil 10 ferner in bekannter Art und Weise eine Zirkulationssperre 28.

Wie insbesondere aus Fig. 2 ersichtlich, sind vorliegend der Ventilsitz 18 und der Ventilkäfig 20 mittels einer Schraubverbindung miteinander verbunden, d.h. der Ventilsitz 18 und der Ventilkäfig 20 bilden eine Baueinheit. Über eine am Ventilkäfig 20 ausgebildete käfigseitige Anschlagfläche 21 und eine dazu korrespondierend im Grundkörper 12-1 des Ventilgehäuses 12 ausgebildete Gehäuseschulter 13 ist die Baueinheit aus Ventilsitz 18 und Ventilkäfig 20 axial abgestützt im Ventilgehäuse 12 gehalten.

Wie Fig. 2 weiter zu entnehmen ist, stehen die Zirkulationssperre 28 und der Ventilkäfig 20 über korrespondierend zueinander ausgebildete, in axialer Richtung a gegenüberliegende Anpressflächen 28-1, 20-1 miteinander in Kontakt, d.h. die Zirkulationssperre 28 sowie die Baueinheit aus Ventilkäfig 20 und Ventilsitz 18 sind an der Gehäuseschulter 13 axial abgestützt gehalten.

Die Befestigung der Bauteile Zirkulationssperre 28 und der Baueinheit aus Ventilkäfig 20 und Ventilsitz 18 erfolgt über ein einziges, die Bauteile Zirkulationssperre 28, Ventilkäfig 20 und Ventilsitz 18 gegen die Gehäuseschulter 13 axial verspannendes Befestigungsmittel 30. Das Befestigungsmittel 30 ist vorliegend als eine ein Außengewinde aufweisende Gewindehülse ausgebildet, die in ein entsprechendes, im Ventilgehäuse 12 korrespondierend ausgebildetes Innengewinde einschraubbar ist.

Diese Ausgestaltung, nämlich die Befestigung der Bauteile Zirkulationssperre 28 sowie der Baueinheit aus Ventilkäfig 20 und Ventilsitz 18 über ein einziges - hier in Form einer Gewindehülse ausgebildetes - Befestigungsmittel 30 erweist sich als besonders vorteilhaft, da zu Wartungszwecken lediglich ein Befestigungsmittel zu lösen ist.

Wie weiterhin aus Fig. 1 und Fig. 2 ersichtlich, sind der Grundkörper 12-1 und der Verlängerungskörper 12-2 zweiteilig ausgebildet, die mittels Verschweißen stoffschlüssig miteinander verbunden sind. Der Übergang zwischen dem Grundkörper 12-1 und dem Verlängerungskörper 12-2 ist somit vorliegend durch die Schweißnaht 32 definiert, da hier das dem Verlängerungskörper 12-2 zugewandte verlängerungsseitige Ende des Grundkörpers 12-1 mit dem dem Grundkörper 12-1 zugewandten grundkörperseitigen Anfang des Verlängerungskörpers 12-2 miteinander verbunden sind.

Die in axialer Richtung a betrachteten Bauteilhöhen der Bauteile Grundkörper 12-1 und Verlängerungskörper 12-2 sind in Fig. 1 mit $h_1$ und $h_2$ bezeichnet. Wie aus Fig. 1 ersichtlich, handelt es sich bei $h_1$ um die ausgehend vom Ventilsitz 18 bis zur Schweißnaht 32 erstreckende Bauteilhöhe des Grundkörpers 12-1 und bei $h_2$ um die sich bis zum Ventildeckel 12-3 erstreckende Bauteilhöhe des Verlängerungskörpers 12-2. Wie aus Fig. 1 weiter ersichtlich, ist vorliegend in axiale Richtung a betrachtet die Zirkulationssperre 28 im Bereich des Grundkörpers 12-1 angeordnet.

**Bezugszeichenliste**

| | |
|---|---|
| 10 | Stellventil |
| 12 | Ventilgehäuse |
| 12-1 | Grundkörper |
| 12-2 | Verlängerungskörper |
| 12-3 | Ventildeckel |
| 13 | Gehäuseschulter |
| 14 | Ventileinlass |
| 16 | Ventilauslass |
| 18 | Ventilsitz |
| 20 | Ventilkäfig |
| 20-1 | Anpressfläche |
| 21 | käfigseitige Anschlagfläche |
| 22 | Ventilglied |
| 24 | Antriebsstange |
| 26 | Stellgliedstange |
| 28 | Zirkulationssperre |
| 28-1 | Anpressfläche |
| 30 | Befestigungsmittel |
| 32 | Schweißnaht |

| | |
|---|---|
| a | axiale Richtung |
| S | Strömungsrichtung |
| $h_1$ | Bauteilhöhe Grundkörper |
| $h_2$ | Bauteilhöhe Verlängerungskörper |

**Patentansprüche**

1. Stellventil (10) zum Regeln und Steuern eines kryogenen Prozessmediums, umfassend ein Ventilgehäuse (12) mit einem einen Ventilein- und Ventilauslass (14, 16) aufweisenden Grundkörper (12-1), einen im Strömungskanal zwischen Ventilein- und Ventilauslass (14, 16) angeordneten Ventilsitz (18), einen im Strömungskanal zwischen Ventilein- und Ventilauslass (14, 16) angeordneten Ventilkäfig (20), sowie ein in Bezug zum Ventilsitz (18) und Ventilkäfig (20) in axialer Richtung (a) verfahrbares Ventilglied (22), das über eine Antriebsstange (24) mit einer Stellgliedstange (26) eines Antriebs verbindbar ist, wobei das Ventilgehäuse (12) einen den Grundkörper (12-1) in axialer Richtung (a) verlängernden Verlängerungskörper (12-2) und einen den Verlängerungskörper (12-2) verschließenden Ventildeckel (12-3) aufweist, durch den die mit der Antriebsstange (24) zu verbindende Stellgliedstange (26) des Antriebs dichtend hindurchführbar ist, wobei das Stellventil (10) ferner eine im Ventilgehäuse (12) angeordnete Zirkulationssperre (28) umfasst, die eine Zirkulation des kryogenen Prozessmediums im Verlängerungskörper (12-2) verhindert, wobei die Zirkulationssperre (28) und der Ventilkäfig (20) über korrespondierend zueinander ausgebildete, in axialer Richtung (a) gegenüberliegende Anpressflächen (28-1, 20-1) miteinander in Kontakt stehen, **dadurch gekennzeichnet, dass** der Ventilkäfig (20) und der Ventilsitz (18) eine Baueinheit bilden und über eine zwischen den Ventilkäfig (20) und Ventilsitz (18) ausgebildete Schraubverbindung miteinander verbunden sind und dass die über die gegenüberliegenden Anpressflächen (28-1, 20-1) miteinander in Kontakt stehenden Zirkulationssperre (28) und die Baueinheit aus Ventilkäfig (20) und Ventilsitz (18) gemeinsam über ein einziges Befestigungsmittel (30) axial verklemmt im Ventilgehäuse (12) gehalten sind, wobei das Befestigungsmittel (30) als eine ein Außengewinde aufweisende Gewindehülse ausgebildet ist, die in ein korrespondierend ausgebildetes Innengewinde im Ventilgehäuse (12-1) einschraubbar ist.

2. Stellventil (10) nach Anspruch 1, **dadurch gekennzeichnet, dass** der Ventilkäfig (20) eine käfigseitige Anschlagfläche (21) und der Grundkörper (12-1) des Ventilgehäuses (12) eine dazu korrespondierend ausgebildete Gehäuseschulter (13) aufweisen, über die der Ventilkäfig (20) und der Grundkörper (12-1) des Ventilgehäuses (12) miteinander in Kontakt stehen und dass die Bauteile Zirkulationssperre (28) und Ventilkäfig (20) zwischen dem Befestigungsmittel (30) und der grundkörperseitigen Gehäuseschulter (13) verklemmt gehalten sind.

3. Stellventil (10) nach Anspruch 2, **dadurch gekennzeichnet, dass** die Zirkulationssperre (28) sowie die Baueinheit aus Ventilsitz (18) und Ventilkäfig (20) zwischen dem Befestigungsmittel (30) und der Gehäuseschulter (13) verklemmt gehalten sind.

4. Stellventil (10) nach Anspruch 1, **dadurch gekennzeichnet, dass** der Ventilsitz (18) eine sitzseitige Kontaktfläche und der Grundkörper (12-1) des Ventilgehäuses (12) einen dazu korrespondierend ausgebildeten grundkörperseitigen Anschlag aufweisen, über die die Baueinheit aus Ventilkäfig (20) und Ventilsitz (18) sowie der Grundkörper (12-1) des Ventilgehäuses (12) miteinander in Kontakt stehen, und dass die Bauteile Zirkulationssperre (28) sowie die Baueinheit aus Ventilkäfig (20) und Ventilsitz (18) zwischen dem Befestigungsmittel (30) und dem grundkörperseitigen Anschlag verklemmt gehalten sind.

5. Stellventil (10) nach Anspruch 1, **dadurch gekennzeichnet, dass** der Ventilkäfig (20) ein Innengewinde und der Ventilsitz (18) ein dazu korrespondierend ausgebildetes Außengewinde aufweist.

6. Stellventil (10) nach einem der vorgenannten Ansprüche, **dadurch gekennzeichnet, dass** das Ventilgehäuses (12) im Bereich der Zirkulationssperre (28) ein Innengewinde aufweist und dass das Befestigungsmittel (30) als eine ein zum Innengewinde korrespondierend ausgebildetes Außengewinde aufweisende Gewindehülse ausgebildet ist.

7. Stellventil (10) nach einem der vorgenannten Ansprüche, **dadurch gekennzeichnet, dass** der Grundkörper (12-1) eine im Vergleich zum Verlängerungskörper (12-2) größere Wandstärke aufweist.

8. Stellventil (10) nach Anspruch 7, **dadurch gekennzeichnet, dass** der Grundkörper (12-1) und der Verlängerungskörper (12-2) einteilig ausgebildet sind, wobei in axialer Richtung (a) betrachtet der Rücksprung der Wandstärke in Bezug auf den Grundkörper (12-1) dessen verlängerungsseitiges Ende und in Bezug auf den Verlängerungskörper (12-2) dessen grundkörperseitigen Anfang definiert.

9. Stellventil (10) nach einem der Ansprüche 1 bis 7, **dadurch gekennzeichnet, dass** der Grundkörper (12-1) und der Verlängerungskörper (12-2) zweiteilig ausgebildet sind, und in axialer Richtung (a) der Grundkörper (12-1) ein dem Verlängerungskörper (12-2) zugewandtes verlängerungsseitiges Ende und der Verlängerungskörper (12-2) einen dem Grundkörper (12-1) zugewandten grundkörperseitigen Anfang aufweist, über die der Grund- und Verlängerungskörper (12-1, 12-2) einander kontaktierend stoff- und/oder form- und/oder kraftschlüssig miteinander verbunden sind.

10. Stellventil (10) nach Anspruch 8 oder 9, **dadurch gekennzeichnet, dass** in axialer Richtung (a) betrachtet der Grundkörper (12-1) des Ventilgehäuses (12) ausgehend vom Ventilsitz (18) bis zum verlängerungsseitigen Ende eine Höhe ($h_1$) und der Verlängerungskörper (12-2) ausgehend von seinem grundkörperseitigen Anfang bis zum deckelseitigen Ende eine Höhe ($h_2$) aufweist, wobei der Grundkörper (12-1) und der Verlängerungskörper (12-2) in Bezug auf ihre Bauteilhöhen so dimensioniert sind, dass gilt:
Höhe ($h_2$) des Verlängerungskörpers (12-2) $\geq$ 2 x Höhe ($h_1$) des Grundkörpers (12-1).

11. Stellventil (10) nach einem der vorgenannten Ansprüche, **dadurch gekennzeichnet, dass** in axialer Richtung (a) betrachtet die Zirkulationssperre (28) im Bereich des Grundkörpers (12-1) angeordnet ist.

12. Stellventil (10) nach einem der Ansprüche 1 bis 10, **dadurch gekennzeichnet, dass** in axialer Richtung (a) betrachtet die Zirkulationssperre (28) im Bereich des Verlängerungskörpers (12-2) angeordnet ist.

**Claims**

1. Control valve (10) for regulating and controlling a cryogenic process medium, comprising a valve housing (12) with a base body (12-1) having a valve inlet and a valve outlet (14, 16), a valve seat (18) arranged in the flow channel between the valve inlet and the valve outlet (14, 16), a valve cage (20) arranged in the flow channel between the valve inlet and valve outlet (14, 16), as well as a valve member (22) which can be moved in the axial direction (a) relative to the valve seat (18) and the valve cage (20) and which can be connected via a drive rod (24) to an actuator rod (26) of a drive, wherein the valve housing (12) comprises an extension body (12-2) extending the base body (12-1) in the axial direction and a valve cover (12-3) closing the extension body (12-2), through which the actuator rod (26) of the actuator, to be connected to the drive rod (24), can be passed in a sealed manner, wherein the control valve (10) further comprises a circulation inhibitor (28) arranged in the valve housing (12), which prevents circulation of the cryogenic process medium within the extension body (12-2), wherein the circulation inhibitor (28) and the valve cage (20) are in contact with one another via contact surfaces (28-1, 20-1) that are designed to match each another and are positioned opposite one another in the axial direction (a), **characterized in that** the valve cage (20) and the valve seat (18) form a single unit and are connected to one another via a screw connection formed between the valve cage (20) and the valve seat (18), and **in that** the circulation inhibitor (28) and the assembly consisting of the valve cage (20) and the valve seat (18), which are in contact with each other via the opposing contact surfaces (28-1, 20-1), are held in place within the valve housing (12) in an axially clamped manner using a single fastening means (30), which latter is designed as a threaded sleeve with an external thread that can be screwed into a correspondingly designed internal thread in the valve housing (12-1).

2. Control valve (10) according to claim 1, **characterized in that** the valve cage (20) has a stop surface (21) on the cage side, and the base body (12-1) of the valve housing (12) has a housing shoulder (13) of a matching shape, via which the valve cage (20) and the base body (12-1) of the valve housing (12) are in contact with one another, and that the components circulation inhibitor (28) and valve cage (20) are held in a clamped manner between the fastening means (30) and the housing shoulder (13) on the base body side.

3. Control valve (10) according to claim 2, **characterized in that** the circulation inhibitor (28) and the assembly consisting of the valve seat (18) and the valve cage (20) are held in a clamped manner between the fastening means (30) and the housing shoulder (13).

4. Control valve (10) according to claim 1, **characterized in that** the valve seat (18) has a contact surface on the seat side, and the base body (12-1) of the valve housing (12) has a correspondingly shaped stop on the side of the base body, via which the assembly consisting of the valve cage (20) and the valve seat (18), as well as the base body (12-1) of the valve housing (12), are in contact with one another, and that the components circulation inhibitor (28) and assembly comprising the valve cage (20) and the valve seat (18) are held in a clamped manner between the fastening means (30) and the stop on the base body side.

5. Control valve (10) according to claim 1, **characterized in that** the valve cage (20) has an internal thread, and the valve seat (18) has an external thread shaped to match it.

6. Control valve (10) according to any one of the preceding claims, **characterized in that** the valve housing (12) has an internal thread in the region of the circulation inhibitor (28), and that the fastening means (30) is formed as a threaded sleeve having an external thread shaped to match the internal thread.

7. Control valve (10) according to any one of the preceding claims, **characterized in that** the wall thickness of the base body (12-1) is greater than that of the extension body (12-2).

8. Control valve (10) according to claim 7, **characterized in that** the base body (12-1) and the extension body (12-2) are formed as a single piece, wherein, as viewed in the axial direction (a), the reduction in wall thickness defines, with respect to the base body (12-1), its end on the side of the extension, and with respect to the extension body (12-2), its beginning on the side of the base body.

9. Control valve (10) according to any one of claims 1 to 7 above, **characterized in that** the base body (12-1) and the extension body (12-2) are formed in two parts, and **in that**, in the axial direction (a), the base body (12-1) has an end, on the side of the extension, that faces the extension body (12-2) and the extension body (12-2) has a beginning, on the side of the base body, that faces the base body (12-1), via which the base body (12-1) and the extension body (12-2) are in contact and connected to one another by way of a material, form, and/or force-fitting connection.

10. Control valve (10) according to any one of claims 8 or 9 above, **characterized in that,** as viewed in the axial direction (a), the base body (12-1) of the valve housing (12) has a height ($h_1$) extending from the valve seat (18) to the extension-side end, and the extension body (12-2) has a height ($h_2$) extending from its beginning on the side of the base body to its end on the side of the cover, wherein the base body (12-1) and the extension body (12-2) are dimensioned with

# EP 4 363 749 B1

respect to their component heights such that the following applies:
Height ($h_2$) of extension body (12-2) $\geq$ 2 x height ($h_1$) of base body (12-1).

11. Control valve (10) according to any one of the preceding claims, **characterized in that**, as viewed in the axial direction (a), the circulation inhibitor (28) is arranged in the region of the base body (12-1).

12. Control valve (10) according to any one of claims 1 to 10 above, **characterized in that,** as viewed in the axial direction (a), the circulation inhibitor (28) is arranged in the region of the extension body (12-2).

## Revendications

1. Soupape de commande (10) pour réguler et commander un milieu de traitement cryogène, comprenant un carter de soupape (12) avec un corps de base (12-1) présentant une entrée de soupape et une sortie de soupape (14, 16), un siège de soupape (18) disposé dans le canal d'écoulement entre l'entrée de soupape et la sortie de soupape (14, 16), une cage de soupape (20) disposée dans le canal d'écoulement entre l'entrée de soupape et la sortie de soupape (14, 16), ainsi qu'un élément de soupape (22) mobile par rapport au siège de soupape (18) et à la cage de soupape (20) dans la direction axiale (a), qui peut être relié à une tige d'élément de commande (26) d'un entraînement par l'intermédiaire d'une tige d'entraînement (24), dans laquelle le carter de soupape (12) présente un corps de prolongement (12-2) prolongeant le corps de base (12-1) dans la direction axiale (a) et un couvercle de soupape (12-3) fermant le corps de prolongement (12-2), à travers lequel la tige d'élément de commande (26) de l'entraînement à relier à la tige d'entraînement (24) peut être guidée de manière étanche, dans laquelle la soupape de commande (10) comprend en outre une barrière de circulation (28) disposée dans le carter de soupape (12), qui empêche une circulation du milieu de traitement cryogène dans le corps de prolongement (12-2), dans laquelle la barrière de circulation (28) et la cage de soupape (20) sont en contact l'une avec l'autre par l'intermédiaire de surfaces de pression de contact (28-1, 20-1) réalisées de manière à correspondre l'une à l'autre, opposées dans la direction axiale (a), **caractérisée en ce que** la cage de soupape (20) et le siège de soupape (18) forment une unité modulaire et sont reliés l'une à l'autre par l'intermédiaire d'une liaison vissée réalisée entre la cage de soupape (20) et le siège de soupape (18) et que la barrière de circulation (28) et l'unité modulaire composée de la cage de soupape (20) et du siège de soupape (18) en contact l'une avec l'autre par l'intermédiaire des surfaces de pression de contact (28-1, 20-1) opposées sont maintenues ensemble dans le carter de soupape (12) de manière axialement bloquée par l'intermédiaire d'un seul moyen de fixation (30), dans laquelle le moyen de fixation (30) est réalisé sous la forme d'une douille filetée présentant un filetage extérieur, qui peut être vissée dans le carter de soupape (12-1) dans un filetage intérieur réalisé de manière correspondante.

2. Soupape de commande (10) selon la revendication 1, **caractérisée en ce que** la cage de soupape (20) présente une surface de butée (21) côté cage et le corps de base (12-1) du carter de soupape (12) un épaulement de carter (13) réalisé de manière correspondante à celle-ci, par l'intermédiaire desquels la cage de soupape (20) et le corps de base (12-1) du carter de soupape (12) sont en contact l'une avec l'autre et que les composants barrière de circulation (28) et cage de soupape (20) sont maintenus de manière bloquée entre le moyen de fixation (30) et l'épaulement de carter (13) côté corps de base.

3. Soupape de commande (10) selon la revendication 2, **caractérisée en ce que** la barrière de circulation (28) ainsi que l'unité modulaire composée du siège de soupape (18) et de la cage de soupape (20) sont maintenues bloquées entre le moyen de fixation (30) et l'épaulement de carter (13).

4. Soupape de commande (10) selon la revendication 1, **caractérisée en ce que** le siège de soupape (18) présente une surface de contact côté siège et le corps de base (12-1) du carter de soupape (12) une butée côté corps de base réalisée de manière correspondante à celle-ci, par l'intermédiaire desquelles l'unité modulaire composée de la cage de soupape (20) et du siège de soupape (18) ainsi que le corps de base (12-1) du carter de soupape (12) sont en contact l'une avec l'autre, et que les composants barrière de circulation (28) ainsi que l'unité modulaire composée de la cage de soupape (20) et du siège de soupape (18) sont maintenus bloqués entre le moyen de fixation (30) et la butée côté corps de base.

5. Soupape de commande (10) selon la revendication 1, **caractérisée en ce que** la cage de soupape (20) présente un filetage intérieur et le siège de soupape (18) un filetage extérieur réalisé de manière correspondante à celui-ci.

6. Soupape de commande (10) selon l'une quelconque des revendications précédentes, **caractérisée en ce que** le carter de soupape (12) présente dans la zone de la barrière de circulation (28) un filetage intérieur et que le moyen de fixation (30) est réalisé sous la forme d'une douille filetée présentant un filetage extérieur réalisé de manière correspondante au filetage intérieur.

7. Soupape de commande (10) selon l'une quelconque des revendications précédentes, **caractérisée en ce que** le corps de base (12-1) présente une épaisseur de paroi plus élevée par rapport au corps de prolongement (12-2).

8. Soupape de commande (10) selon la revendication 7, **caractérisée en ce que** le corps de base (12-1) et le corps de prolongement (12-2) sont réalisés d'une seule pièce, dans laquelle vu dans la direction axiale (a) le retrait de l'épaisseur de paroi définit par rapport au corps de base (12-1) la fin côté prolongement de celui-ci et par rapport au corps de prolongement (12-2) le commencement côté corps de base de celui-ci.

9. Soupape de commande (10) selon l'une quelconque des revendications 1 à 7, **caractérisée en ce que** le corps de base (12-1) et le corps de prolongement (12-2) sont réalisés en deux parties, et dans la direction axiale (a) le corps de base (12-1) présente une fin côté prolongement tournée vers le corps de prolongement (12-2) et le corps de prolongement (12-2) un commencement côté corps de base tourné vers le corps de base (12-1), par l'intermédiaire desquels le corps de base et de prolongement (12-1, 12-2) sont reliés l'un à l'autre par liaison de matière et/ou par coopération de formes et/ou à force de manière à être en contact l'un avec l'autre.

10. Soupape de commande (10) selon la revendication 8 ou 9, **caractérisée en ce que** vu dans la direction axiale (a) le corps de base (12-1) du carter de soupape (12) présente à partir du siège de soupape (18) jusqu'à la fin côté prolongement une hauteur ($h_1$) et le corps de prolongement (12-2) à partir de son commencement côté corps de base jusqu'à la fin côté couvercle une hauteur ($h_2$), dans laquelle le corps de base (12-1) et le corps de prolongement (12-2) sont dimensionnés en ce qui concerne leurs hauteurs de composant de sorte que s'applique :

hauteur ($h_2$) du corps de prolongement (12-2) $\geq$ 2 x hauteur ($h_1$) du corps de base (12-1).

11. Soupape de commande (10) selon l'une quelconque des revendications précédentes, **caractérisée en ce que** vu dans la direction axiale (a) la barrière de circulation (28) est disposée dans la zone du corps de base (12-1).

12. Soupape de commande (10) selon l'une quelconque des revendications 1 à 10, **caractérisée en ce que** vu dans la direction axiale (a) la barrière de circulation (28) est disposée dans la zone du corps de prolongement (12-2).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015005611 A1
- DE 102019104589 A1
- DE 102015011551 B3